(19) Europäisches Patentamt
European Patent Office
Office européen des brevets

(11) Veröffentlichungsnummer : **0 355 479 B1**

(12) # EUROPÄISCHE PATENTSCHRIFT

(45) Veröffentlichungstag der Patentschrift : **15.04.92 Patentblatt 92/16**

(51) Int. Cl.$^5$ : **B01J 31/02,** C08G 18/18, C08G 18/22

(21) Anmeldenummer : **89114062.6**

(22) Anmeldetag : **29.07.89**

(54) **Verfahren zur Herstellung von Katalysatoren und ihre Verwendung zur Herstellung von Isocyanuratgruppen aufweisenden Polyisocyanaten.**

(30) Priorität : **13.08.88 DE 3827596**

(43) Veröffentlichungstag der Anmeldung : **28.02.90 Patentblatt 90/09**

(45) Bekanntmachung des Hinweises auf die Patenterteilung : **15.04.92 Patentblatt 92/16**

(84) Benannte Vertragsstaaten : **BE DE ES FR GB IT NL**

(56) Entgegenhaltungen :
**EP-A- 0 155 559**

(56) Entgegenhaltungen :
**EP-A- 0 339 396**
**US-A- 3 487 080**
**US-A- 3 980 594**
**US-A- 4 582 861**
**US-A- 4 736 008**
**J.Org. Chem, 54, 20, p. 4827-4829 (1989)**

(73) Patentinhaber : **BAYER AG**
**W-5090 Leverkusen 1 Bayerwerk (DE)**

(72) Erfinder : **Scholl, Hans Joachim, Dr.**
**Am Feldrain 5**
**W-5000 Köln 80 (DE)**
Erfinder : **Pedain, Josef, Dr.**
**Haferkamp 6**
**W-5000 Köln 80 (DE)**

**EP 0 355 479 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung von Katalysatoren für die Trimerisierung von Isocyanaten aus Alkalifluoriden und quartären Ammonium- bzw Phosphoniumsalzen, vorzugsweise in stöchiometrischen Mengen, in Alkoholen, wobei gegebenenfalls von Niederschlägen abgetrennt und der Alkohol anschließend entfernt wird, und die Verwendung der neuen Katalysatoren, mit Lösungsmitteln verdünnt, oder vorzugsweise auf Trägermaterialien aufgezogen, als Trimerisationskatalysatoren zur Herstellung von Isocyanuratgruppen aufweisenden Polyisocyanaten.

Katalysatoren zur Trimerisierung organischer Isocyanate sind in großer Zahl bekannt (J.H. Saunders und KC. Frisch, Polyurethanes Chemistry and Technology, S. 94 ff (1962)). Als Katalysatoren für die Trimerisierung sind starke organische Basen geeignet, so z.B. die alkalisch wirkenden Metallsalze von Carbonsäuren, Metallalkoholate, Metallphenolate, Alkalimetallcarbonate, tert. Amine, tert. Phosphine und die "Onium"-Verbindungen von Stickstoff und Phosphor sowie basische Heterocyclen dieser Elemente.

Die Verwendung von quaternären Ammoniumhydroxiden als Katalysator für die Trimerisierung von Isocyanatgruppen ist mehrfach vorbeschrieben. So werden gemäß JP-B 601 337 (US-A 3 487 080) quaternäre Ammoniumhydroxide zusammen mit bestimmten Cokatalysatoren verwendet, wobei in den Ausführungsbeispielen vor allem die Teiltrimerisierung von aromatischen Diisocyanaten gezeigt wird.

Benutzt man die Katalysatoren, die in den Beispielen dieser Patentschrift zur Trimerisierung benutzt werden zur Umsetzung von HDI und verfährt wie dort angegeben, so entstehen überwiegend getrübte, für Lackanwendungen unbrauchbare Produkte.

Die EP-A-10 589 stellt eine Weiterentwicklung der genannten japanischen Patentschrift dar. Gemäß dieser Vorveröffentlichung werden als Katalysatoren für die Trimerisierung von HDI Hydroxyalkyl-Substituenten aufweisende quaternäre Ammoniumhydroxide verwendet. HDI läßt sich hiermit ausgezeichnet trübungsfrei trimerisieren. Nachteilig ist, daß sich die Hydroxyalkylammoniumhydroxide nur sehr schwierig farblos herstellen lassen und in verhältnismäßig großen Mengen bis 0,6 % angewendet werden müssen. Die Verfahrensprodukte, d.h. die von überschüssigem Ausgangsdiisocyanat befreiten, Isocyanuratgruppen aufweisenden Polyisocyanate können daher unter Umständen eine gelbliche Färbung aufweisen.

Die EP-A-47 452 beschreibt die Herstellung von Mischtrimerisaten auf Basis von HDI und IPDI ebenfalls, wie aus den Ausführungsbeispielen ersichtlich, mit vergleichsweise hohen Mengen an Katalysatoren.

Andere bekannte Katalysatorsysteme zur Herstellung von Isocyanuratgruppen aufweisenden Polyisocyanaten haben ebenfalls schwerwiegende Nachteile. So werden beispielsweise in GB-A 920 080, DE-A 3 100 262, DE-A 3 219 608 oder DE-A 3 240 613 Trimerisierungen von HDI unter Verwendung von metallhaltigen Katalysatoren und von Cokatalysatoren wie Phenolen, Alkoholen oder tert. Aminen beschrieben. Die Metallverbindungen lassen sich aus den Endprodukten nicht oder nur mittels sehr aufwendigen Verfahren entfernen und können spätere Anwendungen ebenso wie die Haltbarkeit der Verfahrensprodukte empfindlich stören. Im übrigen führt die Verwendung von aktive Wasserstoffatome aufweisenden Cokatalysatoren zu Nebenreaktionen unter Verbrauch wertvoller Isocyanatgruppen. Dies gilt auch für EP-A-155 559, bei welchem Ammoniumsalze von organischen Säuren als Katalysator unter gleichzeitiger Mitverwendung von hohen Anteilen an alkoholischen Verbindungen eingesetzt werden.

Die EP-A-57 653, EP-A-89 297 und EP-A-187 105 beschreiben siliziumorganische Katalysatoren, die in vergleichsweise hohen Mengen eingesetzt werden. Auch diese Verbindungen können nicht restlos aus dem Verfahrensprodukt entfernt werden und führen bei deren Verwendung zu Störungen.

Es war daher die der Erfindung zugrundeliegende Aufgabe, ein neues Verfahren zur Herstellung von Katalysatoren für die Trimerisierung von Isocyanaten zur Verfügung zu stellen, das folgende Vorteile bewirkt:

– Die einzusetzende Katalysatormenge sollte minimal sein.
– Die Mitverwendung hoher Mengen an Cokatalysatoren sollte unterbleiben.
– Die neuen Katalysatoren sollten als Trimerisations- katalysatoren zur Herstellung von Isocyanuratgruppen aufweisenden Polyisocyanaten zu farblosen, trübungsfreien Verfahrensprodukten bei Einsatz farbloser, trübungsfreier Ausgangsisocyanate führen.

Wie jetzt überraschend gefunden wurde, konnte diese Aufgabe mit dem nachstehend näher beschriebenen erfingsgemäßen Verfahren gelöst werden.

Gegenstand der Erfindung ist ein

Verfahren zur Herstellung von Katalysatoren für die Trimerisierung von organischen Isocyanaten, dadurch gekennzeichnet, daß man Alkalifluorid und quartäres Ammonium-oder Phosphoniumsalz der Formel

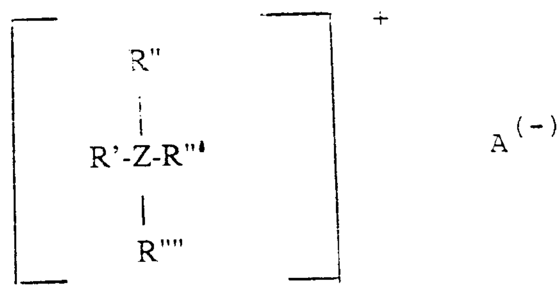

in Alkoholen verrüht, gegebenenfalls von Niederschlägen abtrennt und den Alkohol entfernt, wobei in der genannten Formel

Z für Stickstoff oder Phosphor steht,

R′, R″, R‴und R″″ für gleiche oder verschiedene Reste stehen und Alkylgruppen mit 1-18 Kohlenstoffatomen bedeuten, wobei einer der Reste auch für einen araliphatischen Rest mit 7-15 Kohlenstoffatomen stehen kann, und wobei die Summe der Kohlenstoffatome der 4 Reste bei 10-40 liegt, und

$A^{(-)}$ für das Anion einer starken Mineralsäure steht.

Gegenstand der Erfindung ist auch die Verwendung der nach dem erfindungsgemäßen Verfahren erhaltenen Katalysatorsysteme in mit Lösungsmitteln verdünnter oder auf Trägermaterialien aufgezogenen Form als Trimerisierungskatalysatoren zur Herstellung von Isocyanuratgruppen aufweisenden Polyisocyanaten.

Die ältere, jedoch nicht vorveröffentlichte EP-A-0339 396 befaßt sich mit einem Verfahren zur Herstellung von Isocyanuratgruppen aufweisenden Polyisocyanaten unter Verwendung von quaternären Ammoniumfluoriden als Katalysator. Bei den Katalysatoren dieser älteren Anmeldung handelte es sich um Verkaufsprodukte des Chemikalienhandels, die mit größter Wahrscheinlichkeit nicht nach einem Verfahren, welches mit dem erfindungsgemäßen Verfahren vergleichbar ist, hergestellt worden sind. Jedenfalls fehlt in der älteren Anmeldung jeglicher diesbezüglicher Hinweis. Im übrigen war die Herstellung von Trimerisierungskatalysatoren nach einem Verfahren der Art der erfindungsgemäßen Umsetzung am Prioritätstag der vorliegenden Anmeldung auch noch nicht bekannt, wie beispielsweise aus der nach dem Prioritätstag der vorliegenden Anmeldung erschienen Veröffentlichung von F. Dermeik und Y. Sasson in J. Org. Chem. 1989, 54, Seiten 4827-4829 hervorgeht. Die Autoren dieser Veröffentlichung beschreiben das erfindungsgemäße Verfahren und stellen dessen Vorteile gegenüber den vorbekannten Verfahren zur Herstellung von quartären Ammoniumfluoriden heraus. Die einzigen, nach Ansicht der genannten Autoren vorbekannten Verfahren zur Herstellung von quaternären Ammoniumfluoriden, (a) Neutralisation von quaternären Ammoniumhydroxiden mit wäßrigem Fluorwasserstoff, (b) Reaktion von Silberfluorid mit quaternären Ammoniumchloriden, -bromiden oder -jodiden, (c) Anionenaustausch wäßriger quaternärer Ammoniumhalogenide mit festen Anionenaustauschern in der Fluoridform und (d) Anionenaustausch zwischen wäßrigem Kaliumfluorid und quaternärem Ammoniumhydrogensulfat in organischer Phase können in der Tat mit dem erfindungsgemäßen Verfahren in keinen näheren Zusammenhang gebracht werden.

Die US-A-4 736 008 befaßt sich mit einem Verfahren zur Herstellung von hitzeresistenten Polymeren durch Umsetzung von organischen Polyisocyanaten mit organischen Polycarbonsäuren oder deren Anhydriden in der Gegenwart von Alkalimetallfluoriden als Katalysatoren, die gegebenenfalls auch in Kombination mit quaternären Ammonium- oder Phosphoniumsalzen zur Anwendung gelangen können. Diese Vorveröffentlichung kann jedoch mit der vorliegenden Erfindung in keinerlei näheren Zusammenhang gebracht werden, da (i) die Herstellung von hitzeresistenten Polymeren aus Polyiisocyanaten und Polycarbonsäuren bzw. deren Anhydriden einerseits und die Herstellung von Isocyanuratgruppen aufweisenden Polyisocyanaten andererseits völlig unterschiedliche. Reaktionen sind und (ii) der Hinweis, daß Gemische der genannten Katalysatorkomponenten als solche eingesetzt werden können keinerlei Anregung vermittelt, die erfindungswesentliche Umsetzung in Alkohol durchzuführen.

Ausgangsmaterialien für die erfindungsgemäßen Katalysatoren sind

a) Alkalifluoride der allgemeinen Formel MeF, in der Me für Alkalimetalle steht, vorzugsweise für Kalium,

b) quartäre Ammonium- bzw. Phosphoniumsalze der obengenannten allgemeinen Formel.

Typische Beispiele geeigneter Ausgangsmaterialien nach b) sind Tetra-n-butylaminoniumchlorid oder -bromid, Tricaprylmethylammoniumchlorid oder -bromid, Hexadecyltributylammoniumchlorid oder -bromid, Benzyltrimethylammoniumchlorid oder -bromid, Benzyltriethylammoniumchlorid oder -bromid, Benzyl-dodecyldimethylammoniumchlorid oder -bromid oder die diesen Ammoniumsalzen entsprechenden Phosphoniumsalze.

Zur Herstellung der erfindungsgemäßen Katalysatoren wird beispielsweise das Alkalifluorid a) in Alkoholen

wie Methanol oder Ethanol gelöst oder suspendiert und nachfolgend unter Rühren eine äquimolare Menge an Ammoniumoder Phosphoniumsalz b) zugesetzt, wobei die Mengen an a) und b) auch bis zu 50 Mol-%. jeweils unterschüssig oder überschüssig sein können. Temperatur und Rührzeit sind unkritisch. Normalerweise wird bei Raumtemperatur 20 bis 60 Min. gerührt, das Verhältnis Komponente a) Alkalifluorid zu Alkohol beträgt üblicherweise 0,1 Mol zu 100 - 400 g Alkohol.

Eine bevorzugte Ausführungsform zur Herstellung der erfindungsgemäßen Katalysatoren besteht im nachfolgenden "Aufziehen" auf Trägermaterialien (heterogener Katalysator). Hierzu wird das beschriebene Gemisch in Alkohol, vorzugsweise von unlöslichen Bestandteilen abgetrennt, mit dem vorgesehenen Trägermaterial innig verrührt und anschließend der Alkohol, z. B. im Vakuum, abgetrennt. Geeignete Trägermaterialien sind z. B. Kieselgele, Aluminiumoxide oder Zeolithe. Kieselgele sind bevorzugt. Die Menge des Trägermaterials wird so gewählt, daß 0,05 bis 5 mMol $F^-$, vorzugsweise 0,1 bis 2 mMol $F^-$ pro g Trägermaterial resultieren.

Natürlich kann das erfindungsgemäße Katalysatorsystem auch als homogener Katalysator nach Abtrennen des Alkohols durch entsprechendes Verdünnen in Lösungsmitteln verwendet werden. Geeignete Lösungsmittel sind z. B. Ethylhexandiol-1,3, Acetonitril oder Dimethylformamid. Die Menge des Lösungsmittels wird so gewählt, daß 0,005 bis 0,5 mMol $F^-$, vorzugsweise 0,01 bis 0,1 mMol $F^-$ pro g Lösung resultieren. In bestimmten Fällen kann die Mitverwendung einer geringen Menge an alkoholischen Lösungsmitteln, wie beispielsweise von Ethylhexandiol-1,3 (beispielsweise 0,01 bis 1 Gew.-%, bezogen auf das Gewicht des bei der Trimerisierung eingesetzten Ausgangsisocyanats) bei der erfindungsgemäßen Verwendung von Vorteil sein, da die sich in situ bildenden Urethangruppen cokatalytisch wirksam werden können.

Wie den Vergleichsbeispielen entnommen werden kann, ist die Verwendung der erfindungsgemäßen Kombination Alkalifluorid/Ammonium- bzw. Phosphoniumsalz als Trimerisationskatalysator von erfindungswesentlicher Bedeutung: weder Alkalifluorid noch Ammonium- bzw. Phosphoniumsalz allein ist, entsprechend aufbereitet, wirksam.

Die Menge des eingesetzten Katalysators hängt bei der erfindungsgemäßen Verwendung von der Wahl des organischen Diisocyanats und der Wahl: Katalysator im Lösungsmittel (homogen) oder Heterogenkatalysator (auf Trägermaterial), ab. Die jeweils notwendige Katalysatormenge läßt sich daher am einfachsten in einem Vorversuch bestimmen. Sie liegt bei der homogenen Katalyse in der Regel bei 0,01 bis 0,1 mMol $F^-$/Mol Isocyanat, bei der Heterogenkatalyse normalerweise bei 0,05 bis 1 mMol $F^-$/Mol Isocyanat. Bei diesem bevorzugten Katalysatortyp auf Trägermaterialien können aber auch höhere Mengen verwendet werden, da durch Abfiltration der Trimerisationsfortgang beliebig gestoppt werden kann.

Die erfindungsgemäßen Katalysatoren eignen sich zur Teiltrimerisierung beliebiger organischer Isocyanate. Für die erfindungsgemäße Verwendung geeignete Ausgangsisocyanate sind beispielsweise

1. aromatische Isocyanate eines über 173, vorzugsweise bei 174 bis 400 liegenden Molekulargewichts, wie z. B. $C_8$-$C_{15}$-Alkylbenzoldiisocyanate gemäß EP-A 0 058 368, 2,4- oder 2,6-Toluylendiisocyanat, 2,4-Diphenylmethandiisocyanat, 4,4'-Diphenylmethandiisocyanat, Naphthylen-1,5-diisocyanat, 4,4',4''-Triisocyanatotriphenyl-methan, 2,4,6-Triisocyanatotoluol oder Polyphenyl-polymethylen-polyisocyanate, wie sie durch Anilin-Formaldehyd-Kondensation und anschließende Phosgenierung hergestellt werden ("Roh-MDI"), oder beliebige Gemische dieser Isocyanate;

2. aliphatische oder cycloaliphatische Isocyanate eines über 139, vorzugsweise von 140 bis 250 liegenden Molekulargewichtes wie z. B. Tetramethylendiisocyanat, Hexamethylendiisocyanat (HDI), Dodecanmethylendiisocyanat, Cyclobutan-1,3-diisocyanat, Cyclohexan-1,3- und -1,4-diisocyanat, 1-Isocyanato-3,3,5-trimethyl-5-isocyanatomethyl-cyclohexan (IPDI), Perhydro-2,4- und/oder -2,6-diisocyanatotoluol oder Perhydro-2,4'- und/oder -4,4'-diisocyanatodiphenylmethan oder beliebige Gemische dieser Isocyanate.

Die Trimerisierungsreaktion kann sowohl lösungsmittelfrei, als auch in Anwesenheit von inerten Lösungs- und Verdünnungsmitteln durchgeführt werden. Als inerte Lösungsmittel können unpolare Verdünnungsmittel wie Toluol, Xylol, höhere Aromaten, Leichtbenzin, Testbenzin und $C_{12}$-$C_{20}$-Alkylsulfonsäureester, aber auch inerte polare Lösungsmittel wie Ester und Ketone bzw. Gemische derartiger Lösungsmittel eingesetzt werden.

Die erfindungsgemäße Trimerisierungsreaktion wird im allgemeinen im Temperaturbereich zwischen 10 bis 100°C, vorzugsweise 20 bis 80°C durchgeführt. Die optimale Reaktionstemperatur richtet sich nach der Art der eingesetzten Ausgangspolyisocyanaten und der Art der eingesetzten Trimerisierungskatalysatoren und kann in einem einfachen Vorversuch ermittelt werden.

Die erfindungsgemäße Trimerisierungsreaktion wird im allgemeinen bei Erreichen eines Trimerisierungsgrads (Trimerisierungsgrad = Prozentsatz der trimerisierten Isocyanatgruppen, bezogen auf Gesamtmenge der in Ausgangspolyisocyanat vorliegenden Isocyanatgruppen) von 10 bis 70 % abgebrochen. Der Verlauf der Reaktion kann z. B. durch fortlaufende Bestimmung des Brechungsindex verfolgt werden.

Bei der lösungsmittelfreien Durchführung des erfindungsgemäßen Verfahrens, gegebenenfalls unter anschließender Entfernung von überschüssigem Ausgangsisocyanat, beispielsweise im Dünnschichtverdampfer, liegt der Trimerisierungsgrad im allgemeinen zwischen 10 und 40 %. Bei der Durchführung des erfindungsgemäßen Verfahrens in Gegenwart von Lösungsmitteln ohne anschließende Entfernung von nicht-umgesetztem Ausgangsisocyanat liegt der Trimerisierungsgrad im allgemeinen zwischen 50 und 70 %.

Die Art der Beendigung der Trimerisationsreaktion hängt vom eingesetzten Katalysatortyp ab. Bei der homogenen Katalyse werden zur Beendigung der Trimerisierungsreaktion geeignete Katalysatorgifte verwendet, wie zum Beispiel organische Säuren bzw. Säurechloride, die die erfindungsgemäßen Katalysatoren in ihrer Wirkung desaktivieren, z. B. Sulfonsäuren wie beispielsweise Benzol-oder Toluolsulfonsäure oder ihre Chloride oder saure Ester der phosphorigen Säure oder der Phosphorsäure wie beispielsweise Dibutylphosphit, Dibutylphosphat oder Di-(2-ethylhexyl)-phosphat. Die beispielhaft genannten, mit den Katalysatoren unter deren Desaktivierung chemisch reagierenden Desaktivatoren werden dem Reaktionsgemisch im allgemeinen in einer dem Katalysator zumindest äquivalenten Menge zugefügt. Da die Katalysatoren jedoch während der Trimerisierungsreaktion teilweise desaktiviert werden, ist oftmals die Zugabe einer unter-äquivalenten Menge des Desaktivators ausreichend.

Selbstverständlich können auch Substanzen zur Beendigung der Trimerisierungsreaktion zugesetzt werden, die den Katalysator adsorptiv binden, wie beispielsweise Kieselgele, die anschließend, z. B. durch Filtration, zu entfernen sind.

Bei der Heterogenkatalyse wird, wie bereits dargelegt, die Beendigung der Trimerisierungsreaktion durch Abtrennen des Heterogenkatalysators bewirkt.

Die erfindungsgemäßen Trimerisierungsprodukte können insbesondere im Falle der lösungsmittelfreien Durchführung des erfindungsgemäßen Verfahrens in an sich bekannter Weise, beispielsweise durch Dünnschichtdestillation oder Extraktion von überschüssigen, nicht-umgesetzten Ausgangsisocyanaten befreit werden, so daß Isocyanuratgruppen aufweisende Polyisocyanate mit einem Gehalt an monomeren Ausgangsisocyanaten unter 2 Gew.-%, vorzugsweise unter 0,5 Gew.-%, erhältlich sind.

Die Entfernung von überschüssigen Ausgangsisocyanaten erfolgt vorzugsweise, wenn eine Anwendung der Verfahrensprodukte für Polyurethanlacke vorgesehen ist. Vor ihrer Verwendung als Isocyanat-Komponente in Zweikomponenten-Polyurethanlacken können die erfindungsgemäßen Verfahrensprodukte noch modifiziert werden, beispielsweise durch Einführung von Urethan-, Harnstoff-, Biuret-oder Allophanatoruppen.

Selbstverständlich ist eine Verwendung der erfindungsgemäßen Trimerisierungsprodukte auch ohne Entfernung von überschüssigen Ausgangsisocyanaten möglich, beispielsweise zur Herstellung von Polyurethanschaumstoffen.

Die erfingungsgemäßen Trimerisierungsprodukte können selbstverständlich in an sich bekannter Weise mit geeigneten Blockierungsmitteln für Isocyanatgruppen wie z. B. Phenol, ε-Caprolactam, Malonsäurediethylester oder Acetessigsäureethylester blockiert werden.

Die erfindungsgemäßen Trimerisierungsprodukte bzw. ihre durch die genannte Blockierungsreaktion erhaltenen Derivate stellen wertvolle Ausgangsmaterialien zur Herstellung von Polyurethankunststoffen nach dem Isocyanat-Polyadditionsverfahren dar. Sie eignen sich insbesondere als Isocyanatkomponente in Zweikomponentenpolyurethanlacken.

Die folgenden Beispiele erläutern die Erfindung. Alle Prozentangaben betreffen, soweit nicht anderslautend ausgeführt, Gewichtsprozente.

## Beispiele

### A) Herstellung von Katalysatoren auf Trägermaterialien

### Beispiel 1

6,2 g Kaliumfluorid in 200 g Ethanol werden bei Raumtemperatur mit einer Lösung aus 19,7 g Benzyltrimethylammoniumchlorid in 100 g Ethanol verrührt. Nach 20 Min. filtriert man von unlöslichen Bestandteilen ab und verrührt das Filtrat mit 200 g Kieselgel 60 (Fa. Merck, 70 - 230 mesh, ASTM). Nach 60 Min. Rühren wird das Ethanol im Vakuum abgetrennt.

Man erhält ein rieselfähiges Katalysatorsystem mit den Daten:

$F^-$: 0,42 mMol/g

$Cl^-$: 0,04 mMol/g

Entsprechend Beispiel 1 hergestellte Heterogenkatalysatoren sind in Tabelle I zusammengefaßt.

B) Herstellung von Katalysatoren in Lösung

Beispiel 9

1,2 g Kaliumfluorid in 40 g Methanol werden unter Rühren bei Raumtemperatur mit 3,7 g Benzyltrimethylammoniumchlorid versetzt. Nach 30 Min. filtriert man von unlöslichen Bestandteilen ab und fügt dem Filtrat 370 g 2-Ethylhexandiol-1,3 hinzu. Anschließend wird im Vakuum das Methanol abgetrennt.

Man erhält eine klare Katalysatorlösung mit den Daten:

$F^-$ : 0,05 mMol/g
$Cl^-$: 0,01 mMol/g

Beispiel 10

Entsprechend Beispiel 9 werden 1,2 g Kaliumfluorid und 5 g Benzyltriethylammoniumchlorid in 40 g Ethanol umgesetzt und entsprechend Beispiel 9 in 150 g 2-Ethylhexandiol-1,3 aufbereitet.

Man erhält eine klare Katalysatorlösung mit den Daten:

$F^-$ : 0,11 mMol/g
$Cl^-$: 0,02 mMol/g

Beispiel 11

2,5 g Kaliumfluorid in 80 g Methanol werden unter Rühren bei Raumtemperatur mit 19,3 g Adogen® 464 (Tabelle I[1)]) versetzt. Nach 30 Min. filtriert man von unlöslichen Bestandteilen ab, befreit das Filtrat im Vakuum vom Methanol und nimmt den Rückstand in 370 g Acetonitril auf. Die Katalysatorlösung hat die Daten:

$F^-$ : 0,04 mMol/g
$Cl^-$: 0,01 mMol/g

Tabelle I

| Beispiel | Komponenten (g) | Lösungsmittel | Träger (g) | analytische Daten F⁻ mMol/g | analytische Daten X⁻ mMol/g |
|---|---|---|---|---|---|
| 2 | KF (5)/Adogen® 464[1)] (38,6) | $CH_3OH$ | Kieselgel[2)] (200) | 0,37 | 0,07 X = Cl |
| 3 | KF (3,2)/$(nC_4H_9)_4N^+Br^-$ (17,3) | $CH_3OH$ | " (100) | 0,42 | 0,24 X = Br |
| 4 | KF (3,3)/$(nC_4H_9)_4P^+Br^-$ (19) | $CH_3OH$ | " (100) | 0,47 | 0,3 X = Br |
| 5 | KF (5,8)/ 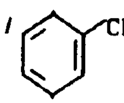 $CH_2-N^+(C_2H_5)_3\ Cl^-$ (20,5) | $C_2H_5OH$ | " (100) | 0,70 | 0,03 X = Cl |
| 6 | KF (6)/ 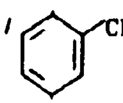 $CH_2-N^+(C_2H_5)_3\ Cl^-$ (18,6) | $C_2H_5OH$ | $Al_2O_3$[3)] (200) | 0,45 | 0,03 X = Cl |
| **Vergl.-Beispiel** | | | | | |
| 7 | KF (5,8)/ - | $CH_3OH$ | $Al_2O_3$ (100) | 0,97 | - |
| 8 | -/ 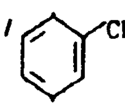 $CH_2-N^+(CH_3)_3\ Cl^-$ (1,8) | $CH_3OH$ | Kieselgel (10) | - | 0,96 X = Cl |

1) **Adogen® 464: Methyltrialkyl ($C_8$-$C_{10}$)** ammoniumchlorid (Fa. Janssen Chimica)

2) **Kieselgel: gemäß Beispiel** 1

3) $Al_2O_3$: **Aluminiumoxid** 90 (Fa. Merck, 70 - 230 mesh ASTM)

Verwendungsbeispiele

Beispiel a) Teiltrimerisierung von HDI

2.016 g (12 Mol) HDI werden unter Stickstoffatmosphäre auf 30°C erwärmt. Anschließend fügt man 2,9 g Katalysator gemäß Beispiel 1 hinzu und prüft den Reaktionsfortgang über zunehmende Brechungsindices. Nach 29 Stunden bei 30°C ist ein Brechungsindex von $n_D^{23°C}$ = 1,4630 erreicht. Man filtriert vom Katalysator ab, versetzt das Filtrat mit 6 g Kieselgel I, um eventuell nicht vollständig abfiltrierten Katalysator zu binden und filtriert erneut. Das Filtrat wird nachfolgend durch Dünnschichtdestillation (Typ "Kurzwegverdampfer") bei 120°C/0,1 mbar bis auf einen Restgehalt von 0,1 % HDI von überschüssigem HDI abgetrennt. Man erhält 445 g eines klaren, farblosen Polyisocyanats mit den Daten:

NCO-Gehalt: 24 %
Viskosität: 2.000 mPas/23°C

Vergleichsbeispiele

Die Vergleichsbeispiele belegen die Unwirksamkeit der Vergleichskatalysatoren 7 und 8 zur Trimerisierung von organischen Isocyanaten:

Vergleichsbeispiel A

336 g (2 Mol) HDI werden unter Stickstoffatmosphäre auf 30°C erwärmt. Anschließend fügt man 1 g Katalysator gemäß Beispiel 7 (Tabelle I) hinzu. Selbst nach 3 Tagen hat sich der anfängliche Brechungsindex $n_D^{23°C}$ = 1,4522 nicht verändert. Auch im IR ist keine Trimerisationsbande ($^-$ 1.690 $cm^{-1}$) zu erkennen.

Vergleichsbeispiel B

Man verfährt wie bei Vergleichsbeispiel A beschrieben und verwendet 3 g Katalysator gemäß Beispiel 8 anstelle des Katalysators gemäß Beispiel 7. Auch in diesem Vergleichsbeispiel ist nach 3 Tage keine Trimerisierung festzustellen.

Beispiel b)

Gemäß Beispiel a) werden 1.680 g (10 Mol) HDI mit 5 g Katalysator von Beispiel 2 zur Umsetzung gebracht. Nach 15 Stunden ist ein Brechungsindex von $n_D^{23°C}$ = 1.4842 erreicht. Nach Aufarbeitung gemäß Beispiel a) erhält man 998 g eines klaren farblosen Polyisocyanats mit den Daten:

NCO-Gehalt: 21,2 %
Viskosität: 35.000 mPas/23°C

Beispiel c)

Gemäß Beispiel a) werden 1.680 g (10 Mol) HDI mit 3 g Katalysator von Beispiel 3 zur Umsetzung gebracht. Nach 30 h ist ein Brechungsindex von $n_D^{23°C}$ = 1,4648 erreicht. Nach entsprechender Aufarbeitung erhält man 427 g eines klaren Polyisocyanats mit den Daten:

NCO-Gehalt: 23,9 %
Viskosität: 2.100 mPas

Beispiel d)

Eine Mischung aus 672 g (4 Mol) HDI und 222 g (1 Mol) IPDI (Isophorondiisocyanat) wird unter Stickstoffatmosphäre auf 40°C erwärmt und mit 3 g Katalysator gemäß Beispiel a) zur Umsetzung gebracht. Nach 28 h bei 40°C ist ein Brechungsindex von $n_D^{23°C}$ = 1,4696 erreicht. Nach Aufarbeitung gemäß Beispiel a) (Dünnschichtung bei 140°C/0,1 mbar) erhält man 190 g eines klaren Polyisocyanats mit den Daten:

NCO-Gehalt: 22,7 %
Viskosität: 3.200 mPas/23°C

Aus der GC-Analyse des gedünnschichteten Destillats errechnet sich für das Polyisocyanat ein molares Verhältnis HDI : IPDI von 8 : 1.

Beispiel e)

Eine Lösung aus 360 g 2,4-Toluylendiisocyanat, 90 g 2,6-Toluylendiisocyanat und 50 g eines Alkylbenzoldi isocyanatgemisches gemäß EP-A-0 058 368 in 500 g Butylacetat wird bei 40°C mit 1 g Katalysator gemäß Beispiel a) zur Umsetzung gebracht. Nach 24 h bei 40°C ist ein Brechungsindex von $n_D^{23°C}$ = 1,4939 erreicht, der NCO-Gehalt ist auf 9,1 % gefallen. Man filtriert vom Katalysator ab und erhält als klare, farblose Lösung ein Isocyanuratgruppenaufweisendes Polyisocyanat-Gemisch mit den Daten:

| | |
|---|---|
| NCO-Gehalt: | 9,1 % |
| Viskosität: | 650 mPas/23°C |
| freies Toluylendiisocyanat: | 0,4 % |
| freies Alkylbenzoldiisocyanat: | 0,1 % |

Beispiel f)

648 g (2 Mol) Alkylbenzoldiisocyanat-Gemisch gemäß EP-A-0 058 368 werden mit 3 g Katalysator von Beispiel 5 zur Umsetzung gebracht. Nach 5 h ist ein Brechungsindex von $n_D^{23°C}$ = 1,5290 erreicht, der NCO-Gehalt ist von 26 % auf 19,5 % gefallen. Man filtriert vom Katalysator ab und erhält ein klares Polyisocyanat-Gemisch mit den Daten:

| | |
|---|---|
| NCO-Gehalt: | 19,5 % |
| Viskosität: | 1.400 mPas/23°C |

Beispiel g)

1.680 g (10 Mol) HDI werden unter Stickstoffatmosphäre auf 40°C erwärmt. Anschließend läßt man 12 g Katalysatorlösung aus Beispiel 9 innerhalb von 30 Min. zutropfen. Nach 7 h bei 40°C ist ein Brechungsindex von $n_D^{23°C}$ = 1,4648 erreicht. Man stoppt mit 0,2 g Dibutylphosphat ab, trennt das überschüssige HDI durch Dünnschichtdestillation bis auf einen Restgehalt von 0,1 % HDI ab und erhält 450 g eines farblosen, klaren Polyisocyanats mit folgenden Daten:

| | |
|---|---|
| NCO-Gehalt: | 23 % |
| Viskosität: | 1.500 mPas/23°C |

Beispiel h)

Gemäß Beispiel g) werden 1.680 g (10 Mol) HDI mit 7,4 g Katalysatorlösung aus Beispiel 10 bei 35°C umgesetzt. Nach 6 h bei 35°C ist ein Brechungsindex von $n_D^{23°C}$ = 1,4611 erreicht. Man fügt 10 g Kieselgel hinzu, läßt 30 Min. bei 35°C nachrühren, filtriert vom Kieselgel ab, arbeitet gemäß Beispiel 9 auf und erhält 330 g eines farblosen, klaren Polyisocyanats mit den Daten:

| | |
|---|---|
| NCO-Gehalt: | 23,5 % |
| Viskosität: | 1.600 mPas/23°C |

**Patentansprüche**

1. Verfahren zur Herstellung von Katalysatoren für die Trimerisierung von organischen Isocyanaten, dadurch gekenneichnet, daß man Alkalifluorid und quartäres Ammonium- oder Phosphoniumsalz der Formel

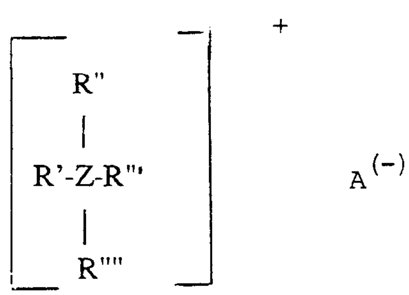

in Alkoholen verrührt, gegebenenfalls von Niederschlägen abtrennt und den Alkohol entfernt, wobei in der

genamten Formel

Z für Stickstoff oder Phosphor steht,

R′, R″, R‴und R⁗ für gleiche oder verschiedene Reste stehen und Alkylgruppen mit 1-18 Kohlenstoffatomen bedeuten, wobei einer der Reste auch für einen araliphatischen Rest mit 7- 15 Kohlenstoffatomen stehen kann, und wobei die Summe der Kohlenstoffatome der 4 Reste bei 10-40 liegt, und

$A^{(-)}$ für das Anion einer starken Mineralsäure steht.

2. Verfahren gemäß Anspruch 1, dadurch gekennzeichnet, daß man den Katalysator in Lösungsmitteln verdünnt in seine Anwendungsform überführt.

3. Verfahren gemäß Anspruch 1, dadurch gekennzeichnet, daß man den katalysator auf Trägermaterialien aufgezogen in seine Anwendungsform überführt.

4. Verfahren gemäß Anspruch 1, dadurch gekennzeichnet, daß man Alkalifluorid und quartäres Ammonium- bzw. Phosphoniumsalz in stöchiometrischen Mengen einsetzt.

5. Verfahren gemäß Anspruch 1, dadurch gekennzeichnet, daß man solche Ammonium- bzw Phosphoniumsalze der genannten Formel einsetzt, für welche $A^{(-)}$ für ein Chlorid- oder Bromidion steht.

6. Verwendung der mit Lösungsmitteln verdünnten Katalysatoren gemäß Anspruch 1 als Trimerisierungskatalysatoren zur Herstellung von Isocyanuratgruppen aufweisenden Polyisocyanaten.

7. Verwendung der auf Trägermaterialien aufgezogenen Katalysatoren gemäß Anspruch 1 als Trimerisierungskatalysatoren zur Herstellung von Isocyanuratgruppen aufweisenden Polyisocyanaten.

## Claims

1. A process for the production of the catalysts for the trimerization of organic isocyanates 1, characterized in that alkali metal fluoride and quaternary ammonium or phosphonium salt corresponding to the formula

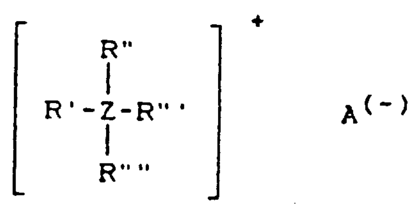

in which

Z is nitrogen or phosphorus,

R′, R″, R‴ and R⁗ are the same or different and represent alkyl groups containing 1 to 18 carbon atoms; one of the radicals may also be an araliphatic radical containing from 7 to 15 carbon atoms and the sum of the carbon atoms in the four radicals is preferably from 10 to 40 and

$A^{(-)}$ is the anion of a strong mineral acid are stirred in alcohols, any deposits formed are separated off and the alcohol is removed.

2. A process as claimed in claim 1, characterized in that the catalyst is converted into its in-use form after dilution in solvents.

3. A process as claimed in claim 1, characterized in that the catalyst is converted into its in-use form after absorption onto support materials.

4. A process as claimed in claims 1 and 2, characterized in that the alkali metal fluoride and the quaternary ammonium or phosphonium salt are used in stoichiometric quantities.

5. A process as claimed in claim 1, characterized in that ammonium or phosphonium salts corresponding to the above formula in which $A^{(-)}$ is a chloride or bromide ion are used.

6. The use of the catalysts according to claim 1 diluted in solvents as trimerization catalysts for the production of polyisocyanates containing isocyanurate groups.

7. The use of the catalysts according to claim 1 absorbed onto support materials as trimerization catalysts for the production of polyisocyanates containing isocyanurate groups.

## Revendications

1. Procédé pour la préparation de catalyseurs pour la trimérisation d'isocyanates organiques, **caractérisé en ce qu'**on mélange dans des alcools un fluorure de métal alcalin et un sel d'ammonium ou de phosphonium

quaternaire de formule

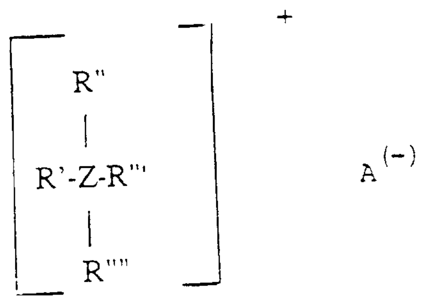

on le sépare éventuellement des précipités et on élimine l'alcool; dans la formule mentionnée,

Z représente un atome d'azote ou un atome de phosphore,

R′, R″, R‴ et R⁗ représentent des radicaux identiques ou différents et désignent des groupes alkyle contenant de 1 à 18 atomes de carbone, un des radicaux pouvant également représenter un radical araliphatique contenant de 7 à 15 atomes de carbone et la somme des atomes de carbone des quatre radicaux étant de l'ordre de 10 à 40, et

$A^{(-)}$ représente l'anion d'un acide minéral fort.

2. Procédé selon la revendication 1, **caractérisé en ce qu'**on transforme le catalyseur dans sa forme d'application en étant dilué dans des solvants.

3. Procédé selon la revendication 1, **caractérisé en ce qu'**on transforme le catalyseur dans sa forme d'application en étant fixé sur des matières de support.

4. Procédé selon la revendication 1, **caractérisé en ce qu'**on met en oeuvre le fluorure de métal alcalin et le sel d'ammonium ou de phosphonium quaternaire dans des quantités stoechiométriques.

5. Procédé selon la revendication 1, **caractérisé en ce qu'**on met en oeuvre des sels d'ammonium ou de phosphonium répondant à la formule mentionnée, dans lesquels $A^{(-)}$ représente un ion chlorure ou bromure.

6. Utilisation des catalyseurs dilués dans des solvants selon la revendication 1, comme catalyseurs de trimérisation pour la préparation de polyisocyanates présentant des groupes isocyanurate.

7. Utilisation des catalyseurs fixés sur des matières de support selon la revendication 1, comme catalyseurs de trimérisation pour la préparation de polyisocyanates présentant des groupes isocyanurate.